# EUROPEAN PATENT APPLICATION

(11) **EP 3 200 098 A1**
(43) Date of publication of application: **02.08.2017**
(21) Application number: 17153491.0
(22) Date of filing: 27.01.2017
(51) Int. Cl.: G06F 17/30

(54) **METHODS AND APPARATUS FOR COMPARING DIFFERENT TYPES OF DATA**

(30) Priority: 28.01.2016 US 201615008675
(71) Applicant: Neopost Technologies, 92220 Bagneux (FR)
(72) Inventor: RABENOK, Vladimir, RICHMOND HILL, L4C 7X5 (CA)
(74) Representative: David, Alain

(57) **Abstract**

Methods and apparatus for comparing unrelated data types are provided. The provided techniques can evaluate a relevance of mixed-type data, such as data having a mix of numerical categories and text categories. In an example, a method includes receiving a plurality of records including a first record and a second record. Each record has a numerical category and a non-numerical category. The method includes calculating a first difference between a first number in the numerical category of the first record and a second number in the numerical category of the second record, calculating a first complex distance based on a second difference in categorical values between corresponding non-numerical categories in the first record and the second record, and forming a second complex distance between the first record and the second record by adding the first difference to the first complex distance.

## Description

### FIELD OF DISCLOSURE

This disclosure relates generally to electronics, and more specifically, but not exclusively, to methods and apparatuses that compare a mix of different data types.

### BACKGROUND

Conventional techniques for comparing datasets do not compare a mix of different data types. A mix of different data types can include data having a mix of symbols, numbers, and text. For example, conventional techniques are not able to compare a numerical length (e.g., 10 meters) to a textual description of a color (e.g., blue). Accordingly, there are long-felt needs, including unrecognized needs, for methods and apparatus improving upon conventional methods and apparatus.

### SUMMARY

This summary provides a basic understanding of some aspects of the present teachings. This summary is not exhaustive in detail, and is neither intended to identify all critical features, nor intended to limit the scope of the claims.

In an example, a method for comparing different data types is provided. The method includes receiving, from a computer interface, a plurality of records including a first record and a second record. Each record in the plurality of records has a numerical category and a non-numerical category. The method also includes calculating a first difference between a first number in the numerical category of the first record and a second number in the numerical category of the second record, as well as calculating a first complex distance based on a second difference in categorical values between corresponding non-numerical categories in the first record and the second record and forming a second complex distance between the first record and the second record by adding the first difference to the first complex distance. The calculating the first distance can include calculating the first distance using a Euclidean distance algorithm, a Manhattan distance algorithm, or the like. The calculating the first distance can include calculating the first distance using a practicable known algorithm. The calculating the first complex distance can include calculating the first complex distance using at least one of a dice algorithm, a Jaccard distance algorithm, a Boolean reasoning algorithm, or the like. The calculating the first complex distance can include calculating the first complex distance using a practicable known algorithm. The method can also include determining a respective complex distance between each remaining combination of records in the plurality of records, as well as selecting, as a respective group, a pair of records having the lowest respective complex distance. The method can further include removing the pair of records from further complex distance determinations that are based on individual records in the plurality of record, and repeating the determining, the selecting, and the removing. Moreover, the method can include computing a respective complex distance between each remaining group, as well as choosing, as a respective cluster, a pair of groups having the lowest respective complex distance. The method can include eliminating the respective cluster from further complex distance determinations that are based on pairs of groups and repeating the computing, the choosing, and the eliminating. The method can further include the plurality of records including a third record, and include calculating a third difference between the first number in the numerical category of the first record and a third number in the numerical category of the third record, calculating a third complex distance based on a fourth difference in categorical values between corresponding non-numerical categories in the first record and the third record, forming a fourth complex distance by adding the third difference to the third complex distance, and identifying a fifth complex distance between the first record, the second record, and the third record by subtracting the fourth complex distance from the second complex distance. The method can include weighting one or more of the first difference and the first complex distance. The method can include receiving the plurality of records via a computer network, from a computer, a mobile device, a wearable device, a cloud-based computer network, or a combination thereof.

In a further example, provided is a non-transitory computer-readable medium, including processor-executable instructions stored thereon. The processor-executable instructions are configured to cause a processor to initiate executing one or more parts of the aforementioned method. The non-transitory computer-readable medium can be integrated with a computing device.

In another example, provided is a first apparatus configured to compare different data types. The first apparatus includes means for receiving, from a computer interface, a plurality of records including a first record and a second record. Each record in the plurality of records has a numerical category and a non-numerical category. The first apparatus also includes means for calculating a first difference between a first number in the numerical category of the first record and a second number in the numerical category of the second record, means for calculating a first complex distance based on a second difference in categorical values between corresponding non-numerical categories in the first record and the second record, and means for forming a second complex distance between the first record and the second record by adding the first difference to the first complex distance. The means for calculating the first distance can include means for calculating the first distance using a Euclidean distance algorithm, a Manhattan distance algorithm, or the like. The means for calculating the first distance can include means for calculating the first distance using a practicable known algorithm. The means for calculating the first complex distance can include means for calculating the first complex distance using at least one of a dice algorithm, a Jaccard distance algorithm, a Boolean reasoning algorithm, or the like. The means for calculating the first complex distance can include means for calculating the first complex distance using a practicable known algorithm. The first apparatus can also include means for determining a respective complex distance between each remaining combination of records in the plurality of records, means for selecting, as a respective group, a pair of records having the lowest respective complex distance, as well as means for removing the pair of records from further complex distance determinations that are based on individual records in the plurality of records, and means for repeating the determining, the selecting, and the removing. The first apparatus can also include means for computing a respective complex distance between each remaining group, means for choosing, as a respective cluster, a pair of groups having the lowest respective complex distance, as well as means for eliminating the respective cluster from further complex distance determinations that are based on pairs of groups, and means for repeating the computing, the choosing, and the eliminating. The first apparatus can also include the plurality of records including a third record, as well as means for calculating a third difference between the first number in the numerical category of the first record and a third number in the numerical category of the third record, means for calculating a third complex distance based on a fourth difference in categorical values between corresponding non-numerical categories in the first record and the third record, means for forming a fourth complex distance by adding the third difference to the third complex distance, and means for identifying a fifth complex distance between the first record, the second record, and the third record by subtracting the fourth complex distance from the second complex distance. The first apparatus can also include means for weighting one or more of the first difference and the first complex distance. The means for receiving the plurality of records can further include means for receiving the first postal address via a computer network, from a computer, a mobile device, a wearable device, a cloud-based computer network, or a combination thereof. The first apparatus can also include a computing device, with which the means for receiving the plurality of records is a constituent part. The first apparatus can include a computing device with which the means for forming the second complex distance are integrated.

In another example, provided is a second apparatus configured to compare different data types. The second apparatus includes a processor and a memory coupled to the processor and configured to cause the processor to initiate creating specific logic circuits within the processor. The specific logic circuits are configured to cause the processor to receive, from a computer interface, a plurality of records including a first record and a second record. Each record in the plurality of records has a numerical category and a non-numerical category. The specific logic circuits are configured to cause the processor to calculate a first difference between a first number in the numerical category of the first record and a second number in the numerical category of the second record, calculate a first complex distance based on a second difference in categorical values between corresponding non-numerical categories in the first record and the second record, and form a second complex distance between the first record and the second record by adding the first difference to the first complex distance. The calculating the first distance can further include calculating the first distance using a Euclidean distance algorithm, a Manhattan distance algorithm, or the like. The calculating the first distance can further include calculating the first distance using a practicable known algorithm. The calculating the first complex distance can further include calculating the first complex distance using at least one of a dice algorithm, a Jaccard distance algorithm, or a Boolean reasoning algorithm. The calculating the first complex distance can include calculating the first complex distance using a practicable known algorithm. The memory can be configured to cause the processor to initiate creating specific logic circuits configured to cause the processor to determine a respective complex distance between each remaining combination of records in the plurality of records, and to select, as a respective group, a pair of records having the lowest respective complex distance, as well as to remove the pair of records from further complex distance determinations that are based on individual records in the plurality of records and to repeat the determining, the selecting, and the removing. The memory can be configured to cause the processor to initiate creating specific logic circuits configured to compute a respective complex distance between each remaining group, to choose, as a respective cluster, a pair of groups having the lowest respective complex distance, to eliminate the respective cluster from further complex distance determinations that are based on pairs of groups, and to repeat the computing, the choosing, and the eliminating. The plurality of records can include a third record, and the memory can be configured to cause the processor to initiate creating specific logic circuits configured to cause the processor to calculate a third difference between the first number in the numerical category of the first record and a third number in the numerical category of the third record, to calculate a third complex distance based on a fourth difference in categorical values between corresponding non-numerical categories in the first record and the third record, to form a fourth complex distance by adding the third difference to the third complex distance, and to identify a fifth complex distance between the first record, the second record, and the third record by subtracting the fourth complex distance from the second complex distance. The memory can be configured to cause the processor to initiate creating specific logic circuits configured to cause the processor to weight one or more of the first difference and the first complex distance. The memory can be configured to cause the processor to initiate creating specific logic circuits configured to cause the processor to receive the plurality of records via a computer network, from a computer, a mobile device, a wearable device, a cloud-based computer network, or a combination thereof. In an example, the second apparatus further includes a computing device with which the processor is integrated. The processor can be a microprocessor, a microcontroller, a digital signal processor, a field programmable gate array, a programmable logic device, an application-specific integrated circuit, a controller, a non-generic special-purpose processor, a state machine, a gated logic device, a discrete hardware component, a dedicated hardware finite state machine, or a combination thereof.

The foregoing broadly outlines some of the features and technical advantages of the present teachings so the detailed description and drawings can be better understood. Additional features and advantages are also described in the detailed description. The conception and disclosed examples can be used as a basis for modifying or designing other devices for carrying out the same purposes of the present teachings. Such equivalent constructions do not depart from the technology of the teachings as set forth in the claims. The inventive features characteristic of the teachings, together with further objects and advantages, are better understood from the detailed description and the accompanying drawings. Each of the drawings is provided for the purpose of illustration and description only, and does not limit the present teachings.

### BRIEF DESCRIPTION OF THE DRAWINGS

The accompanying drawings are presented to describe examples of the present teachings, and are not limiting.
FIGS. 1A-1C depict an example method for comparing different data types.
FIG. 2 depicts an example computing device.
FIG. 3 depicts an example network.

In accordance with common practice, the features depicted by the drawings may not be drawn to scale. Accordingly, the dimensions of the depicted features may be arbitrarily expanded or reduced for clarity. In accordance with common practice, some of the drawings are simplified for clarity. Thus, the drawings may not depict all components of a particular apparatus or method. Further, like reference numerals denote like features throughout the specification and figures.

### DETAILED DESCRIPTION

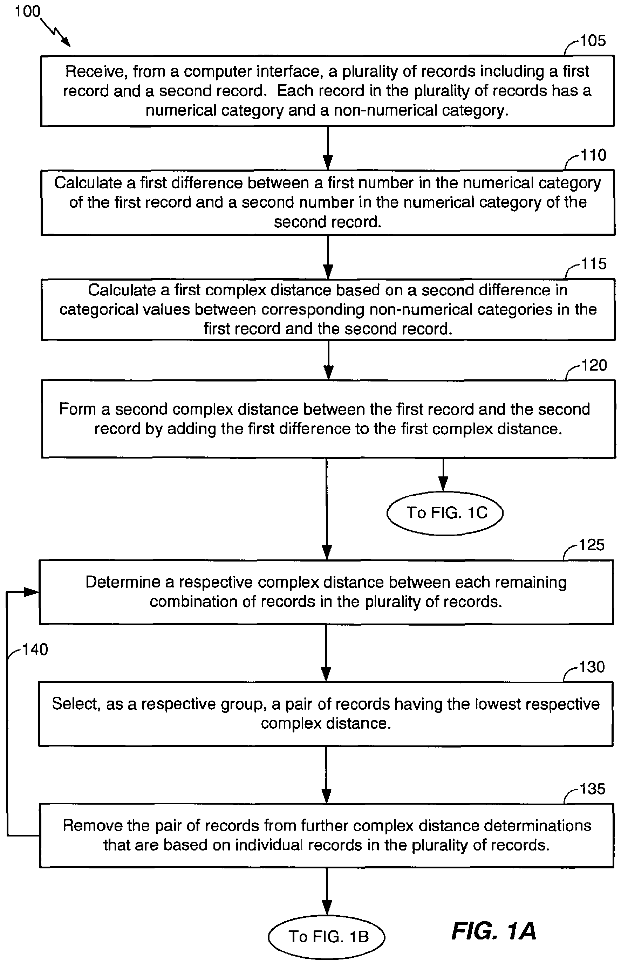

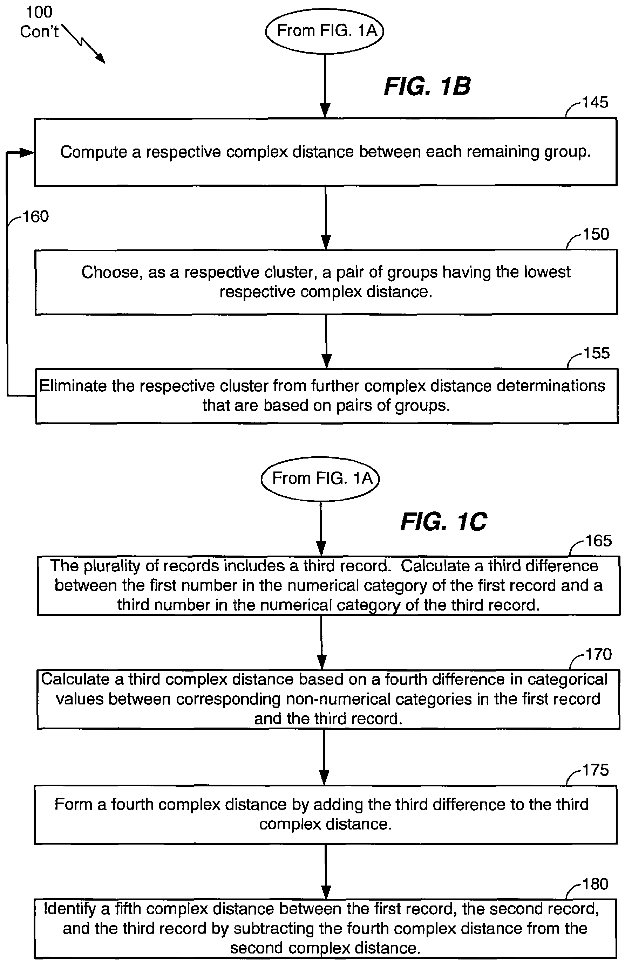

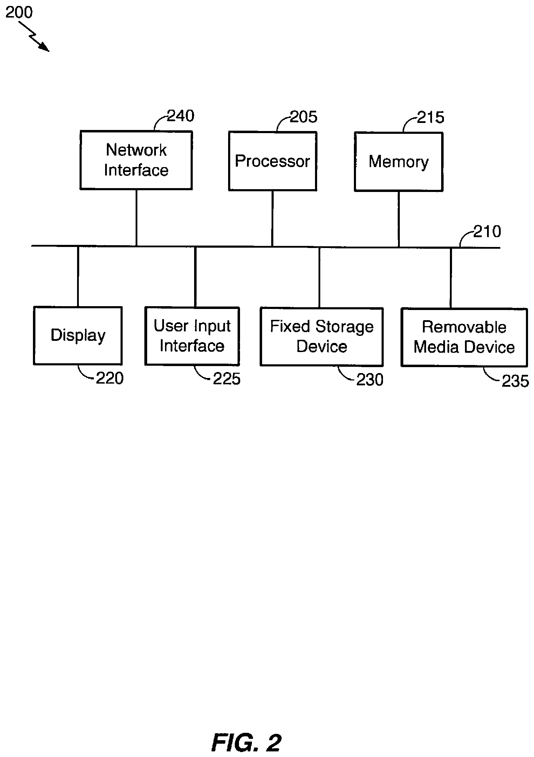

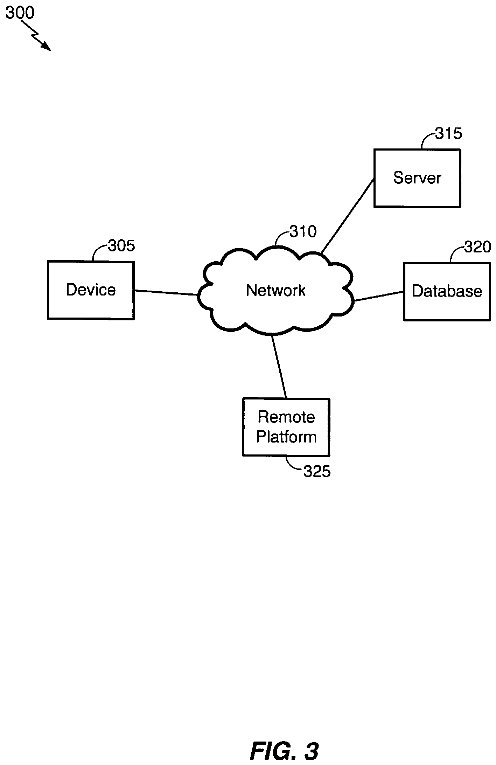

FIG. 1 depicts an example method 100 for comparing different data types. A result of the method 100 is an indication of "distance" between records including non-numerical data. The indicated distance is a measure of similarity of data between records. In an example, another result of the method 100 is an ordering of records by distance - the records are ordered by degree of similarity. The method 100 for comparing different data types can be performed by the apparatus described hereby, such as a computing device 200 (as depicted in FIG. 2), an electronic device 305 (as depicted in FIG. 3), a server 315 (as depicted in FIG. 3), a remote platform 325 (as depicted in FIG. 3), the like, or a combination thereof. The method 100 can be advantageously used when performing data analytics, such as location analytics, data comparison calculations, data proximity calculations, data similarity calculations, and can process most, if not all, data.

In block 105, a plurality of records including a first record and a second record are received, for example, from a computer interface. The plurality of records can be received at a processor, via a computer network, from a computer, from a mobile device, from a wearable device, from a cloud-based computer network, the like, or a combination thereof.

Each record in the plurality of records has one or more numerical categories and one or more non-numerical categories. A numerical category includes numbers and can include numerical separators such as a comma, a period, the like, and combinations thereof. A numerical category may not include a letter or text character. The numerical category can include any practicable non-text representation of a number that creates a continuous sequence of numerical values across a plurality of records. For example, a numerical category can include income information, a house number, a number of residents in a household, a number of children, a length, a width, a height, a weight, a volume, the like, or combinations thereof. A non-numerical category is a category which includes a symbol other than a number. A non-numerical category can include numbers. For example, a non-numerical category can include a postal code (for example, TD15 1 LT), a color, a gender, a shape, a description, statistics, the like, or combinations thereof. A category can have a defined range of possible values, a defined set of possible values, or the like. Optionally, after being received, the data can be standardized to correct a misspelling, to alter the arrangement of the data to make the data conform to a specific format, the like, or a practicable combination thereof.

In block 110, a first difference between a first number in the numerical category of the first record and a second number in the numerical category of the second record is calculated. The calculating the first distance can include calculating the first distance using a Euclidean distance algorithm, a Manhattan distance algorithm, a SquaredEuclidean algorithm, a Canberra algorithm, a Cosine algorithm, a Bray-Curtis algorithm, a Chessboard algorithm, the like, or a practicable known algorithm. The first difference can be weighted to improve accuracy of the method 100. The first difference can be weighted higher for relatively more important categories, while the first difference can be weighted lower for relatively less important categories.

In block 115, a first complex distance is calculated. The calculation is based on a second difference in categorical values between corresponding non-numerical categories in the first record and the second record. In an example, the second difference can be a total number of differences in categorical values between corresponding non-numerical categories in the first record and the second record. In another example, numerical values are assigned to each potential attribute in a set of attributes for a specific category. The second difference can be a difference between a first numerical value assigned to a respective attribute in the specific category in the first record and a second numerical value assigned to a respective attribute in the specific category in the second record. The first complex distance can be calculated by multiplying the second difference by the imaginary number "i". The calculating the first complex distance can also include calculating the first complex distance using at least one of a dice algorithm, a Jaccard distance algorithm, a Boolean reasoning algorithm, a Hamming algorithm, a Rogers-Tanimoto algorithm, a Russel-Rao algorithm, a Sokal-Sneath algorithm, a Kulczynski algorithm, or the like. The calculating the first complex distance can also include calculating the first complex distance using a practicable known algorithm. Block 115 does not include comparing numerical values to non-numerical values.

The first complex difference can be weighted to improve accuracy of the method 100. The first complex distance can be weighted higher for relatively more important categories. The first complex difference can be weighted lower for relatively less important categories.

In block 120, a second complex distance between the first record and the second record is formed by adding the first difference to the first complex distance. The method 100 can continue to optional block 125, to optional block 165 in FIG. 1C, or the method 100 can end.

Optional blocks 125 through 140 can be performed as a set of blocks.

In optional block 125, a respective complex distance between each remaining combination of records in the plurality of records is determined.

In optional block 130, a pair of records having the lowest respective complex distance is selected as a respective group.

In optional block 135, the pair of records is removed from further complex distance determinations which are based on individual records in the plurality of records. The method 100 can continue to block 145 in FIG. 1B, can continue to block 140, or can end.

In optional item 140, block 125, block 130, and block 135 are repeated. The repeating due to item 140 can continue until all remaining records are part of a respective group, or a single record remains.

Referring to FIG. 1 B, optional blocks 145 through 160 can be performed as a set of blocks.

In optional block 145, a respective complex distance between each remaining group is computed. In optional block 150, a pair of groups having the lowest respective complex distance is chosen as a respective cluster.

In optional block 155, the respective cluster is eliminated from further complex distance determinations that are based on pairs of groups. The method 100 can continue to block 160 or can end.

In optional item 160, block 145, block 150, and block 155 are repeated. The repeating due to item 160 can continue until all remaining groups are part of a cluster, or a single group remains. Referring to FIG. 1C, optional blocks 165 through 180 can be performed as a set of blocks.

In optional block 165, the plurality of records includes a third record. A third difference between the first number in the numerical category of the first record and a third number in the numerical category of the third record is calculated.

In optional block 170, a third complex distance based on a fourth difference in categorical values between corresponding non-numerical categories in the first record and the third record is calculated.

In optional block 175, a fourth complex distance is formed by adding the third difference to the third complex distance.

In optional block 180, a fifth complex distance between the first record, the second record, and the third record is identified by subtracting the fourth complex distance from the second complex distance.

The foregoing blocks are not limiting of the examples. The blocks can be combined and/or the order can be rearranged, as practicable.

In a non-limiting example, records can be compared using the method 100, as follows. The example records include the following information:
Data structure: record number; first numerical category; first non-numerical category
First record: 1; blue
Second record: 1; red

When performing block 110 on this example, the first number in the first numerical category of the first record is "1". The second number in the first numerical category of the second record is also "1". Thus, using a Euclidean algorithm, the first difference is SQRT[(1-1)(1-1)] = 0.

When performing block 115 on this example, the second difference in categorical values can be calculated using the Dice method. Because blue is not equal to red, the second difference will be "1". The first complex distance is 1 i.

When performing block 120 on this example, the second complex distance, which is the complex distance between the first record and the second record, is the first difference added to the first complex distance, is (0+i) = i.

To demonstrate a complicated example of the method 100, we can expand on the example, and increase the number of categories in the data structure:
Data structure: record number; first numerical category; second numerical category; third numerical category; first non-numerical category; second non-numerical category
First record: 1; 5; 7; blue; apple
Second record: 1; 3; 7; red; apple
Third record: 2; 5; 7; green; orange

When performing block 110 on this example, using a Euclidean algorithm, the first difference between the first record and the second record is SQRT[(1-1)(1-1) + (5-3)(5-3) + (7-7) (7-7)] = 2. When performing block 115 on this example, the second distance between the first record and the second record is [(blue is not equal to red) and (apple is equal to apple)] = (1+0) = 1. Thus, the first complex distance is 1 i.

When performing block 120 on this example, the second complex distance between the first record and the second record is (2+1i).

When performing block 120 on this example, the second complex distance between the first record and the third record is (1+2i). Using complex subtraction, a difference between these complex distances can be calculated as (2+1 i) - (1+2i) = (1-1 i).

The following is a different example showing how records can be grouped according to distance. The data is nursing family characteristics. The data has eight records, with each record having nine categories. The categories and their respective attribute values are:
- income: integer: in thousand $
- parents: usual, pretentious, great_pret
- has_nurs: proper, less_proper, improper, critical, very_crit
- form: complete, completed, incomplete, foster
- children: integer: 1, 2, 3, ...
- housing: convenient, less_conv, critical
- finance: convenient, inconv
- social: non-prob, slightly_prob, problematic
- health: recommended, priority, not_recom

The income category and the children category are numerical categories, while the remaining categories are non-numerical categories. In this example, the non-numerical categories have respective finite sets of possible attributes (e.g., the finance category has a finite set of two possible attributes: convenient and inconv (i.e., inconvenient)).

The input data (i.e., the plurality of records received in block 105) is:

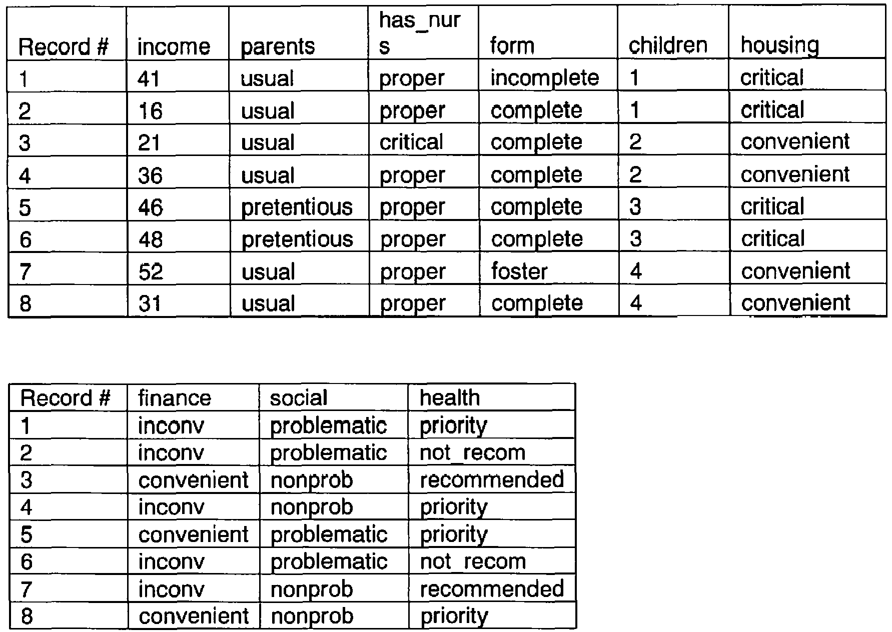

Performing the method 100 on this data, including performing block 105 through block 160, yields the following groups of records after performing block 125 through block 140: 1-5, 2-6, 3-8, 4-7. Performing block 145 through block 160 yields the following grouping (i.e., clusters) of records, based on complex distance:
Group 1: 1, 5
Group 2: 3, 4, 7, 8
Group 3: 2, 6

FIG. 2 illustrates the example computing device 200 suitable for implementing examples of the presently disclosed subject matter. At least a portion of the methods, sequences, algorithms, steps, or blocks described in connection with the examples disclosed hereby can be embodied directly in hardware, in software executed by a processor (for example, a processor described hereby), or in a combination of the two. In an example, a processor includes multiple discrete hardware components. A software module can reside in a storage medium (for example, a memory device), such as a random-access memory (RAM), a flash memory, a read-only memory (ROM), an erasable programmable read-only memory (EPROM), an electrically erasable programmable read-only memory (EEPROM), a register, a hard disk, a removable disk, a compact disc read-only memory (CD-ROM), a storage medium, the like, or a combination thereof. An example storage medium (for example, a memory device) can be coupled to the processor so the processor can read information from the storage medium, write information to the storage medium, or both. In an example, the storage medium can be integral with the processor.

Further, examples provided hereby are described in terms of sequences of actions to be performed by, for example, one or more elements of a computing device. The actions described hereby can be performed by a specific circuit (for example, an application specific integrated circuit (ASIC)), by program instructions being executed by one or more processors, or by a combination of both. Additionally, a sequence of actions described hereby can be entirely within any form of non-transitory computer-readable storage medium having stored thereby a corresponding set of computer instructions which, upon execution, cause an associated processor (such as a special-purpose processor) to perform at least a portion of a method, a sequence, an algorithm, a step, or a block described hereby. Performing at least a part of a function described hereby can include initiating at least a part of a function described hereby, at least a part of a method described hereby, the like, or a combination thereof. In an example, execution of the stored instructions can transform a processor and any other cooperating devices into at least a part of an apparatus described hereby. A non-transitory (that is, a non-transient) machine-readable media specifically excludes a transitory propagating signal. Additionally, a sequence of actions described hereby can be entirely within any form of non-transitory computer-readable storage medium having stored thereby a corresponding set of computer instructions which, upon execution, configure the processor to create specific logic circuits (for example, one or more tangible electronic circuits configured to perform a logical operation). Thus, examples may be in a number of different forms, all of which have been contemplated to be within the scope of the disclosure.

In an example, when a general-purpose computer (for example, a processor) is configured to perform at least a portion of a method described hereby, then the general-purpose computer becomes a special-purpose computer which is not generic and is not a general-purpose computer. In an example, loading a general-purpose computer with special programming can cause the general-purpose computer to be configured to perform at least a portion of a method, a sequence, an algorithm, a step, or a block described in connection with an example disclosed hereby. In an example, a combination of two or more related method steps disclosed hereby can form a sufficient algorithm. A sufficient algorithm can constitute special programming. Special programming can constitute any software which can cause a computer (for example, a general-purpose computer, a special-purpose computer, etc.) to be configured to perform one or more functions, features, steps algorithms, blocks, or a combination thereof, as disclosed hereby.

The computing device 200 can be, for example, a desktop computer, a laptop computer, a mobile device, the like, or a combination thereof. The computing device 200 can include a processor 205, a bus 210, a memory 215 (such as random-access memory (RAM), read-only memory (ROM), flash RAM, the like, or a combination thereof), a video display 220 (such as a display screen), a user input interface 225 (which can include one or more controllers and associated user input devices such as a keyboard, mouse, touch screen, the like, or a combination thereof), a fixed storage device 230 (such as a hard drive, flash storage, the like, or a combination thereof), a removable media device 235 (operative to control and receive an optical disk, flash drive, the like, or a combination thereof), a network interface 240 operable to communicate with one or more remote devices via a suitable network connection, or a combination thereof. Examples of the disclosed subject matter can be implemented in, and used with, different component and network architectures.

The processor 205 is configured to control operation of the user device 200, including performing at least a part of a method described hereby. The processor 205 can perform logical and arithmetic operations based on processor-executable instructions stored within the memory 215. The processor 205 can execute instructions stored in the memory 215 to implement at least a part of a method described herein, e.g., the processing illustrated in FIGs. 1A-1B. The instructions, when executed by the processor 205, can transform the processor 205 into a special-purpose processor that causes the processor to perform at least a part of a function described hereby.

The processor 205 can comprise or be a component of a processing system implemented with one or more processors. The one or more processors can be implemented with a microprocessor, a microcontroller, a digital signal processor, a field programmable gate array (FPGA), a programmable logic device (PLD), an application-specific integrated circuit (ASIC), a controller, a state machine, gated logic, a discrete hardware component, a dedicated hardware finite state machine, any other suitable entity that can at least one of manipulate information (for example, calculating, logical operations, the like, or a combination thereof), control another device, the like, or a combination thereof. The processor 205 may also be referred to as a central processing unit (CPU), a special-purpose processor, or both.

The bus 210 interconnects components of the computing device 200. The bus 210 can enable information communication between the processor 205 and one or more components coupled to the processor 205. The bus system 210 can include a data bus, a power bus, a control signal bus, a status signal bus, the like, or a combination thereof. The components of the computing device 200 can be coupled together to communicate with each other using a different suitable mechanism. The memory 215, can include at least one of read-only memory (ROM), random access memory (RAM), a flash memory, an erasable programmable read-only memory (EPROM), an electrically erasable programmable read-only memory (EEPROM), a register, other memory, the like, or a combination thereof stores information (for example, data, instructions, software, the like, or a combination thereof) and is configured to provide the information to the processor 205. The RAM can be a main memory configured to store an operating system, an application program, the like, or a combination thereof. The ROM (for example, a flash memory) can be configured to store a basic input-output system (BIOS) which can control basic hardware operation such as the processor's 205 interaction with peripheral components. The memory 210 can also include a non-transitory machine-readable media configured to store software. Software can mean any type of instructions, whether referred to as at least one of software, firmware, middleware, microcode, hardware description language, the like, or a combination thereof. Instructions can include code (for example, in source code format, in binary code format, executable code format, or in any other suitable code format).

The video display 220 can include a component configured to visually convey information to a user of the computing device 200.

The user input interface 225 can include a keypad, a microphone, a speaker, a display, the like, or a combination thereof. The user input interface 225 can include a component configured to convey information to a user of the computing device 200, receive information from the user of the computing device 200, or both.

The fixed storage device 230 can be integral with the computing device 200 or can be separate and accessed through other interfaces. The fixed storage device 230 can be an information storage device which is not configured to be removed during use, such as a hard disk drive.

The removable media device 235 can be integral with the computing device 200 or can be separate and accessed through other interfaces. The removable media device 235 can be an information storage device which is configured to be removed during use, such as a memory card, a jump drive, flash memory, the like, or a combination thereof. Code to implement the present disclosure can be stored in computer-readable storage media such as one or more of the memory 215, the fixed storage device 230, the removable media device 235, a remote storage location, the like, or a combination thereof.

The network interface 240 can electrically couple the computing device 200 to a network and enable exchange of information between the computing device 200 and the network. The network, in turn, can couple the computing device 200 to another electronic device, such as a remote server, a remote storage medium, the like, or a combination thereof. The network can enable exchange of information between the computing device 200 and the electronic device.

The network interface 240 can provide a connection via a wired connection, a wireless connection, or a combination thereof. The network interface 240 can provide such connection using any suitable technique and protocol as is readily understood by one of skill in the art. Example techniques and protocols include digital cellular telephone, Wi-Fi™, Bluetooth®, near-field communications (NFC), the like, and combinations thereof. For example, the network interface 240 can enable the computing device 200 to communicate with other computers via one or more local, wide-area, or other communication networks. Other devices or components (not shown in FIG. 2) (for example, document scanners, digital cameras, and the like) can be coupled via the network interface 240.

All of the components illustrated in FIG. 2 need not be present to practice the present disclosure. Further, the components can be coupled in different ways from that illustrated.

FIG. 3 depicts an example network 300 suitable for implementing examples of the presently disclosed subject matter. The network 300 includes the electronic device 305. The electronic device 305 can include the computing device 200, a local computer, a smart phone, a mobile device, a tablet computer, an electronic device described hereby (as is practicable), the like, or a combination thereof. The electronic device 305 is electrically coupled to a network 310.

The network 310 can be a private network, a local network, a wide-area network, the Internet, any suitable communication network, the like, or a combination thereof. The network 310 can be implemented on any suitable platform including a wired network, a wireless network, an optical network, the like, or a combination thereof.

The network 310 can enable the electronic device 305 to communicate (for example, access) with one or more remote devices, such as the server 315, a database 320, the like, or a combination thereof. In a further example, a remote device can be configured to provide intermediary access, such as where the server 315 is configured to provide access to resources stored in the database 320. The network 310 can enable the electronic device 305 to communicate (for example, access) with the remote platform 325. For example, the remote platform 325 can be a cloud computing arrangement, a search engine, a content delivery system, the like, or a combination thereof. The remote platform 325 can include the server 315, the database 320, the like, or a combination thereof.

All of the components illustrated in FIG. 3 need not be present to practice the present disclosure. Further, the components can be coupled in different ways from that illustrated.

As used hereby, the term "example" means "serving as an example, instance, or illustration." Any example described as an "example" is not necessarily to be construed as preferred or advantageous over other examples. Likewise, the term "examples" does not require all examples include the discussed feature, advantage, or mode of operation. Use of the terms "in one example," "an example," "in one feature," and/or "a feature" in this specification does not necessarily refer to the same feature and/or example. Furthermore, a particular feature and/or structure can be combined with one or more other features and/or structures. Moreover, at least a portion of the apparatus described hereby can be configured to perform at least a portion of a method described hereby.

It should be noted the terms "connected," "coupled," and any variant thereof, mean any connection or coupling between elements, either direct or indirect, and can encompass a presence of an intermediate element between two elements which are "connected" or "coupled" together via the intermediate element. Coupling and connection between the elements can be physical, logical, or a combination thereof. Elements can be "connected" or "coupled" together, for example, by using one or more wires, cables, printed electrical connections, electromagnetic energy, the like, or a combination thereof. The electromagnetic energy can have a wavelength at a radio frequency, a microwave frequency, a visible optical frequency, an invisible optical frequency, the like, or a practicable combination thereof. These are several non-limiting and non-exhaustive examples. The term "signal" can include any signal such as a data signal, an audio signal, a video signal, a multimedia signal, an analog signal, a digital signal, the like, or a practicable combination thereof. Information and signals described hereby can be represented using any of a variety of different technologies and techniques. For example, data, an instruction, a process step, a process block, a command, information, a signal, a bit, a symbol, the like, or a practicable combination thereof, which are referred to hereby can be represented by a voltage, a current, an electromagnetic wave, a magnetic field, a magnetic particle, an optical field, an optical particle, the like, or a practicable combination thereof, depending at least in part on the particular application, at least in part on a design, at least in part on a corresponding technology, at least in part on like factors, or a practicable combination thereof.

A reference using a designation such as "first," "second," and so forth does not limit either the quantity or the order of those elements. Rather, these designations are used as a convenient method of distinguishing between two or more elements or instances of an element. A reference to first and second elements does not mean only two elements can be employed. A reference to first and second elements does not mean the first element must necessarily precede the second element. Also, unless stated otherwise, a set of elements can comprise one or more elements. In addition, terminology of the form "at least one of: X, Y, or Z" or "one or more of X, Y, or Z," or "at least one of the group consisting of X, Y, and Z" can be interpreted as "X or Y or Z or any combination of these elements." For example, this terminology can include X, or Y, or Z, or X and Y, or X and Z, or X and Y and Z, or 2X, or 2Y, or 2Z, and so on.

The terminology used hereby is for the purpose of describing particular examples and is not intended to be limiting. The singular forms "a," "an," and "the" include the plural forms as well, unless the context clearly indicates otherwise. In other words, the singular can portend the plural, where practicable. The terms "comprises," "comprising," "includes," and "including," specify a presence of a feature, an integer, a step, a block, an operation, an element, a component, the like, or a combination thereof. The terms "comprises," "comprising," "includes," and "including," do not necessarily preclude a presence or an addition of another feature, integer, step, block, operation, element, component, and the like.

In examples, an apparatus disclosed hereby can be at least a part of an electronic device, coupled to an electronic device, or a combination thereof, where the electronic device can be, but is not limited to, a mobile device, a navigation device (for example, a global positioning system receiver, a global navigation satellite system receiver, the like, or a combination thereof), a wireless device, a computer, the like, or a combination thereof.

The term "mobile device" can describe, and is not limited to: a mobile phone, a mobile communication device, a mobile hand-held computer, a portable computer, a tablet computer, a wireless device, a wireless modem, the like, or a combination thereof.

Those of skill in the art will appreciate the example functions, methods, logical blocks, modules, circuits, and steps described in the examples disclosed hereby can be implemented as electronic hardware, computer software, or combinations of both, as is practicable. To illustrate this interchangeability of hardware and software, example functions, methods, logical blocks, modules, circuits, and steps have been described hereby generally in terms of their functionality. Whether such functionality is implemented as hardware or software depends upon a particular application and design constraints imposed on an overall system. Skilled artisans can implement the described functionality in different ways for each particular application, but such implementation decisions should not be interpreted as causing a departure from the scope of the present disclosure.

Nothing stated or depicted in this application is intended to dedicate any component, step, block, feature, object, benefit, advantage, or equivalent to the public, regardless of whether the component, step, block, feature, object, benefit, advantage, or the equivalent is recited in the claims. Additionally, conventional elements of the current teachings may not be described in detail, or may be omitted, to avoid obscuring aspects of the current teachings. While this disclosure describes examples, changes and modifications can be made to the examples disclosed hereby without departing from the scope defined by the appended claims. The present disclosure is not intended to be limited to the specifically disclosed examples alone.

## Claims

1. A method for comparing different data types, comprising:
receiving, from a computer interface (240), a plurality of records including a first record and a second record, wherein each record in the plurality of records has a numerical category and a non-numerical category;
calculating a first difference between a first number in the numerical category of the first record and a second number in the numerical category of the second record;
calculating a first complex distance based on a second difference in categorical values between corresponding non-numerical categories in the first record and the second record; and
forming a second complex distance between the first record and the second record by adding the first difference to the first complex distance.

2. The method of claim 1, comprising:
determining a respective complex distance between each remaining combination of records in the plurality of records;
selecting, as a respective group, a pair of records having the lowest respective complex distance;
removing the pair of records from further complex distance determinations that are based on individual records in the plurality of records; and
repeating the determining, the selecting, and the removing.

3. The method of claim 2, comprising:
computing a respective complex distance between each remaining group;
choosing, as a respective cluster, a pair of groups having the lowest respective complex distance;
eliminating the respective cluster from further complex distance determinations that are based on pairs of groups; and
repeating the computing, the choosing, and the eliminating.

4. The method of claim 1, wherein the calculating the first complex distance further comprises calculating the first complex distance using at least one of a dice algorithm, a Jaccard distance algorithm, a Boolean reasoning algorithm, a Hamming algorithm, a Rogers-Tanimoto algorithm, a Russel-Rao algorithm, a Sokal-Sneath algorithm, or a Kulczynski algorithm.

5. The method of claim 1, further comprising:
wherein the plurality of records includes a third record;
calculating a third difference between the first number in the numerical category of the first record and a third number in the numerical category of the third record;
calculating a third complex distance based on a fourth difference in categorical values between corresponding non-numerical categories in the first record and the third record;
forming a fourth complex distance by adding the third difference to the third complex distance; and
identifying a fifth complex distance between the first record, the second record, and the third record by subtracting the fourth complex distance from the second complex distance.

6. The method of claim 1, further comprising weighting one or more of the first difference and the first complex distance.

7. The method of claim 1, further comprising receiving the plurality of records via a computer network (310), from a computer, from a mobile device, from a wearable device, from a cloud-based computer network, or a combination thereof.

8. An apparatus configured to compare different data types, comprising:
a processor (205);
a memory (215) coupled to the processor (205) and configured to cause the processor to initiate creating specific logic circuits within the processor (205), wherein the specific logic circuits are configured to cause the processor to:
receive, from a computer interface (240), a plurality of records including a first record and a second record, wherein each record in the plurality of records has a numerical category and a non-numerical category;
calculate a first difference between a first number in the numerical category of the first record and a second number in the numerical category of the second record;
calculate a first complex distance based on a second difference in categorical values between corresponding non-numerical categories in the first record and the second record; and
form a second complex distance between the first record and the second record by adding the first difference to the first complex distance.

9. The apparatus of claim 8, wherein the memory (215) is configured to cause the processor (205) to initiate creating specific logic circuits configured to cause the processor (205) to:
determine a respective complex distance between each remaining combination of records in the plurality of records;
select, as a respective group, a pair of records having the lowest respective complex distance;
remove the pair of records from further complex distance determinations that are based on individual records in the plurality of records; and
repeat the determining, the selecting, and the removing.

10. The apparatus of claim 8, wherein the memory (215) is configured to cause the processor (205) to initiate creating specific logic circuits configured to cause the processor (205) to:
compute a respective complex distance between each remaining group;
choose, as a respective cluster, a pair of groups having the lowest respective complex distance;
eliminate the respective cluster from further complex distance determinations that are based on pairs of groups; and
repeat the computing, the choosing, and the eliminating.

11. The apparatus of claim 8, further comprising a computing device (200) with which the processor (205) is integrated.

12. The apparatus of claim 8, wherein the processor (205) is a microprocessor, a microcontroller, a digital signal processor, a field programmable gate array, a programmable logic device, an application-specific integrated circuit, a controller, a non-generic special-purpose processor, a state machine, a gated logic device, a discrete hardware component, a dedicated hardware finite state machine, or a combination thereof.

13. A non-transitory computer-readable medium, comprising:
processor-executable instructions stored thereon configured to cause a processor (205) to:
initiate receiving, from a computer interface, a plurality of records including a first record and a second record, wherein each record in the plurality of records has a numerical category and a non-numerical category;
initiate calculating a first difference between a first number in the numerical category of the first record and a second number in the numerical category of the second record;
initiate calculating a first complex distance based on a second difference in categorical values between corresponding non-numerical categories in the first record and the second record; and
initiate forming a second complex distance between the first record and the second record by adding the first difference to the first complex distance.

14. The non-transitory computer-readable medium of claim 13, wherein the processor-executable instructions further include instructions configured to cause the processor (205) to:
initiate determining a respective complex distance between each remaining combination of records in the plurality of records;
initiate selecting, as a respective group, a pair of records having the lowest respective complex distance;
initiate removing the pair of records from further complex distance determinations that are based on individual records in the plurality of records; and
initiate repeating the determining, the selecting, and the removing.

15. The non-transitory computer-readable medium of claim 13, wherein the processor-executable instructions further include instructions configured to cause the processor (205) to:
initiate computing a respective complex distance between each remaining group;
initiate choosing, as a respective cluster, a pair of groups having the lowest respective complex distance;
initiate eliminating the respective cluster from further complex distance determinations that are based on pairs of groups; and
initiate repeating the computing, the choosing, and the eliminating.
